# EUROPÄISCHE PATENTANMELDUNG

(11) **EP 1 041 021 A2**
(43) Veröffentlichungstag der Anmeldung: **04.10.2000**
(21) Anmeldenummer: 00106618.2
(22) Anmeldetag: 28.03.2000
(51) Int. Cl.: B65G 57/18

(54) **Lattenlegevorrichtung**

(30) Priorität: 01.04.1999 DE 19914891
(71) Anmelder: Kallfass Maschinenbau GmbH & Co., 72270 Klosterreichenbach (DE)
(72) Erfinder: Haist, Hans, D-72270 Baiersbronn (DE)
(74) Vertreter: Frank, Gerhard, Dipl.-Phys.

(57) **Zusammenfassung**

Es wird eine Lattenlegevorrichtung zum Auflegen von Latten auf einen Holzstapel beschrieben. Die Lattenlegevorrichtung umfaßt ein Magazin mit wenigstens einem Anschlag (10) zur Aufnahme der Latten (30) und einen Greifer (26) zum Auflegen der Latten (30) auf einen sich bildenden Holzstapel. Der Greifer (26) ist in Bezug auf das Magazin in zwei Raumrichtungen verfahrbar und dient dazu, die jeweils oberste Latte (30A) zu greifen und auf den Holzstapel aufzulegen.

## Beschreibung

Die Erfindung betrifft eine Lattenlegevorrichtung zum Auflegen von Latten auf Holzstapel nach dem Oberbegriff des Anspruchs 1.

Beim Aufschichten von Holzstapeln werden in der Regel in regelmäßigen Abständen quer zu den Holzbrettern schmale Latten eingelegt, die dazu dienen, den Holzstapel zu stabilisieren und ggf. die Trocknung des Holzstapels zu erleichtern.

Herkömmliche Lattenlegevorrichtungen bestehen zumeist aus einem Magazinschacht für die Latten und einer Ausrückvorrichtung in Form eines Schiebers. Ein solcher Magazinschacht weist an seinem unteren Ende einen parallel zu den Latten angeordneten Auswurfschlitz auf. Mit einem horizontal bewegbaren Schieber wird dann die jeweils unterste Latte aus dem Magazinschacht herausgedrückt und fällt auf den sich bildenden Holzstapel. Diese Vorrichtungen haben einen Nachteil, daß zum einen eine exakte Positionierung der Latten nicht möglich ist, und es nicht ausgeschlossen werden kann, daß Latten zufällig hochkant liegen bleiben, was zu Fehlern im sich bildenden Holzstapel führt. Weiterhin muß der Magazinschacht an sich mechanisch sehr stabil ausgebildet sein, um die hohen Scherkräfte, die beim Ausschieben der unterste Latte auftreten, kompensieren zu können. Weiterhin haben solche Vorrichtungen den Nachteil, daß die Länge und Breite des Magazinschachts und die Höhe des Auswurfschlitzes auf die jeweils verwendeten Latten angepaßt werden muß, was zu relativ hohen Umrüstzeiten beim Wechsel der Latten führt, wenn Latten mit unterschiedlichen Abmessungen verwendet werden sollen.

Aus der kanadischen Patentanmeldung 2,200,656 ist eine Lattenlegevorrichtung bekannt, die das Problem des exakten Positionierens der Latten überwindet. Auch hier sind ein oder mehrere vertikal stehende Magazinschächte vorgesehen, aus denen durch eine Öffnung die jeweils unterste Latte ausgeschoben wird. Diese Latte wird von einem vertikal bewegbaren Pneumatikgreifer aufgenommen und nach unten auf den Holzstapel abgelegt. Diese Vorrichtung hat jedoch weiterhin den Nachteil, daß die Magazinschächte die beim Ausschieben der Latten auftretenden Scherkräfte aufnehmen müssen und entsprechend massiv konstruiert sein müssen. Auch muß weiterhin beim Umrüsten auf Latten mit anderen Abmessungen die Länge und Breite des Magazinschachts und die Höhe des Auswurfschlitzes angepaßt werden, was zu den bereits erwähnten langen Umrüstzeiten führt.

Ausgehend von diesem Stand der Technik liegt der Erfindung die Aufgabe zugrunde, eine Lattenlegevorrichtung zu schaffen, die einen mechanisch einfachen Aufbau erlaubt, und bei der die Umrüstzeiten beim Wechsel der Lattenabmessungen minimiert werden.

Diese Aufgabe wird mit einer Lattenlegevorrichtung mit den Merkmalen des Anspruchs 1 gelöst.

Grundgedanke der Erfindung ist es, ebenfalls einen Greifer einzusetzen, der die Latten auf den sich bildenden Holzstapel ablegt. Dieser Greifer ist jedoch im Verhältnis zum Magazin in eine weitere Richtung verschiebbar oder verschwenkbar, so daß es möglich wird, die jeweils oberste Latte im Magazin zu greifen und auf den sich bildenden Holzstapel abzulegen. Dadurch kann auf ein Ausschieben der jeweils untersten Latte aus dem Magazin verzichtet werden, wodurch das Magazin mechanisch erheblich einfacher aufgebaut werden kann. Es entfällt insbesondere die Notwendigkeit für einen Auswurfschlitz, so daß das Magazin nicht mehr schachtartig aufgebaut sein muß. Dadurch kann der Aufwand beim Wechsel zwischen Latten verschiedener Abmessungen minimiert werden.

Ein bevorzugtes Ausführungsbeispiel wird nun anhand von Zeichnungen näher erläutert:

Es zeigen:
- Fig. 1a: eine Lattenlegevorrichtung in einer ersten Arbeitsstellung in einer Frontansicht, in einer ersten Arbeitsstellung
- Fig. 1b: die Lattenlegevorrichtung aus Fig. 1a in einer Seitenansicht,
- Fig. 2a: die Lattenlegevorrichtung aus Fig. 1a in einer zweiten Arbeitsstellung,
- Fig. 2b: die Lattenlegevorrichtung aus Fig. 1b in einer zweiten Arbeitsstellung,
- Fig. 3a: die Lattenlegevorrichtung aus Fig. 1a in einer dritten Arbeitsstellung,
- Fig. 3b: die Lattenlegevorrichtung aus Fig. 1b in einer dritten Arbeitsstellung,
- Fig. 4a: die Lattenlegevorrichtung aus Fig. 1a in einer vierten Arbeitsstellung,
- Fig. 4b: die Lattenlegevorrichtung aus Fig. 1b in einer vierten Arbeitsstellung,
- Fig. 5a: die Lattenlegevorrichtung aus Fig. 1a in einer fünften Arbeitsstellung,
- Fig. 5b: die Lattenlegevorrichtung aus Fig. 1b in einer fünften Arbeitsstellung.

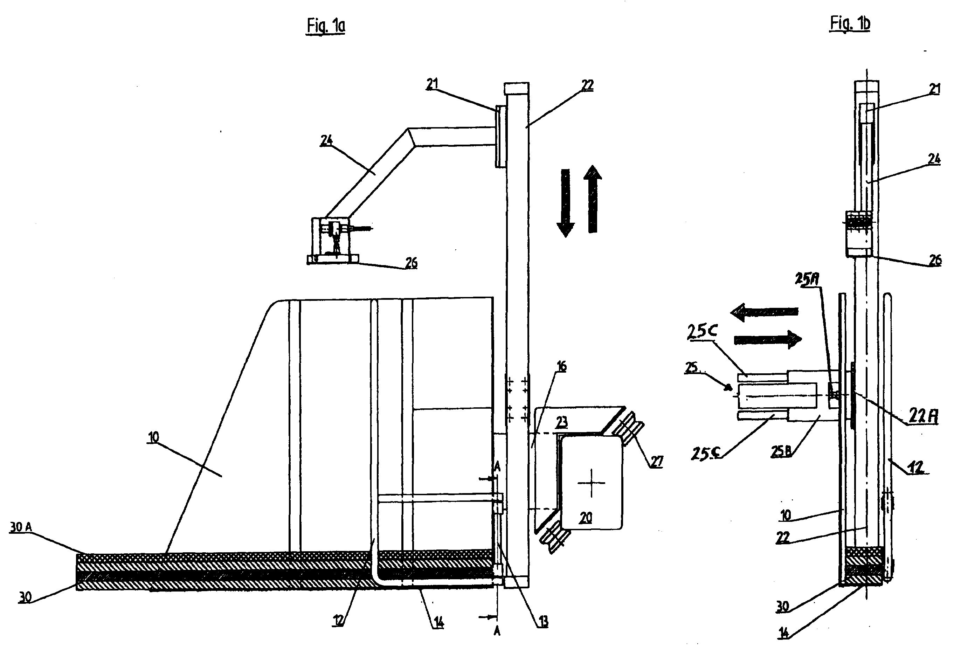

Die Fign. 1a und 1b zeigen eine erfindungsgemäße Lattenlegevorrichtung in einer ersten Arbeitsstellung. Die Lattenlegevorrichtung besteht aus zwei Einheiten: dem Magazin und der Greifereinheit. Beide Einheiten sind miteinander verbunden und an einem Horizontalläufer 23 befestigt, der auf einer Horizontalschiene 20 verfahrbar angeordnet ist. Somit kann die Lattenlegevorrichtung als Ganzes horizontal bewegt werden. Dies kann Vorteile beim Nachfüllen der Latten 30 bieten, ist aber nicht für jede Anwendung zwingend erforderlich. Horizontalläufer und Horizontalschiene sind in den Seitenansichten nicht dargestellt.

Das Magazin weist einen ersten senkrecht stehenden Anschlag 10, eine starr mit dem ersten Anschlag 10 verbundene horizontal verlaufende Bodenplatte 14 und einen schwenkbaren zweiten Anschlag 12 auf. Der erste Anschlag 10 und die Bodenplatte 14 bilden einen einfachen Winkel, in den die Latten 30 eingelegt werden. Der zweite Anschlag 12 ist um die Achse A-A schwenkbar am Verbindungsteil 13 gehalten, das in einer starren Verbindung mit dem ersten Anschlag 10 steht. Im Verbindungsteil 13 ist eine hier nicht dargestellte Spiralfeder angeordnet, die den zweiten Anschlag 12 in Richtung des ersten Anschlags 10 drückt. Zum Auffüllen des Magazins wird der zweite Anschlag 12 vom ersten Anschlag 10 weggezogen und die Latten 30 werden eingefüllt. Irgendwelche Justierungen beim Wechsel der Lattenart oder der Lattenlänge, Lattenbreite oder Lattendicke sind nicht notwendig. Durch den von der Spiralfeder beaufschlagten zweiten Anschlag 12 werden die Latten 30 an den ersten Anschlag 10 gedrückt, so daß sie eine exakt definierte Position einnehmen.

Der zweite Bestandteil der erfindungsgemäßen Lattenlegevorrichtung ist die Greifereinheit. Sie ist hier wie folgt aufgebaut:
Ein Vakuumgreifer 26 ist an einem Arm 24 befestigt. Dieser Arm 24 mündet in einem Vertikalläufer 21, welcher in einer Vertikalschiene 22 vertikal verfahrbar gehalten ist. Die Vertikalschiene 22 ist mittels einer Zwischenplatte 22A an der Kolbenstange 25A und den Führungswellen 25C einer Pneumatikzylindereinheit 25 befestigt. Der stationäre Teil 25B der Pneumatikzylindereinheit 25 ist am ersten Anschlag 10 befestigt. Somit kann der Vakuumgreifer 26 bei ortsfestem Magazin in zwei Raumrichtungen linear verfahren werden.

Im folgenden wird die Funktionsweise der erfindungsgemäßen Lattenlegevorrichtung durch Beschreibung eines Arbeitsgangs erläutert:
Die Lattenlegevorrichtung ist oberhalb eines sich bildenden Holzstapels angeordnet, wobei die Bretter für diesen Holzstapel von einer anderen Maschine zugeführt und aufgestapelt werden. Die Lattenlegevorrichtung dient dazu, in definierten Intervallen Latten in den sich bildenden Holzstapel einzulegen. Hierfür wird zunächst das Magazin mit Latten 30 befüllt. Dazu wird der Arm 24 in seine obere Grundstellung (Fig. 1a) gefahren, der zweite Anschlag 12 manuell nach außen gezogen und die Latten 30 von Hand eingelegt. Nach Loslassen des zweiten Anschlags 12 drückt dieser die Latten 30 gegen den ersten Anschlag und die Lattenlegevorrichtung ist betriebsbereit. Die Lattenlegevorrichtung verharrt nun in der in den Fign. 1a und 1b gezeigten Position bis die erste Latte auf den sich bildenden Holzstapel abgelegt werden soll. In dieser Grundstellung befindet sich der Vakuumgreifer 26 genau über den Latten 30.

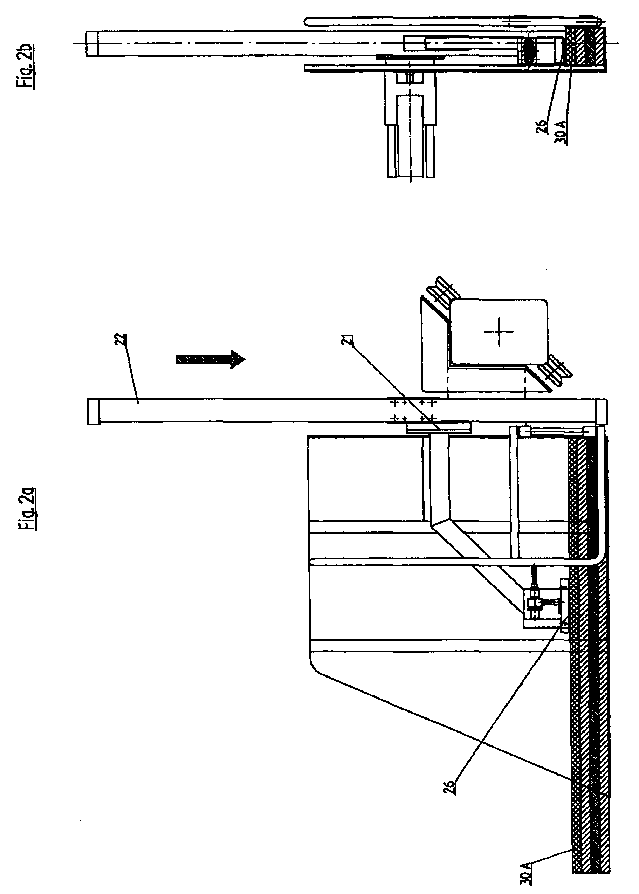

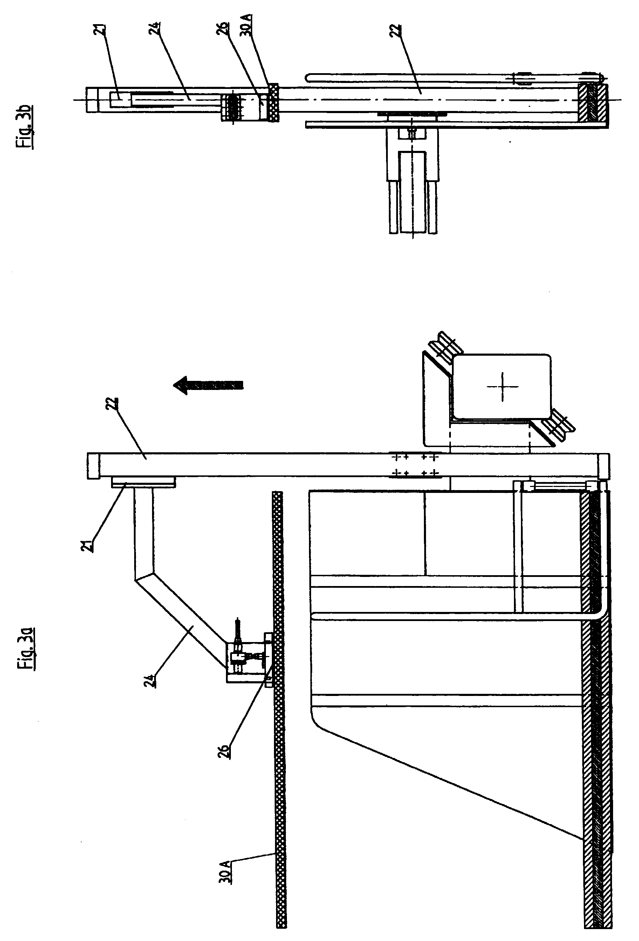

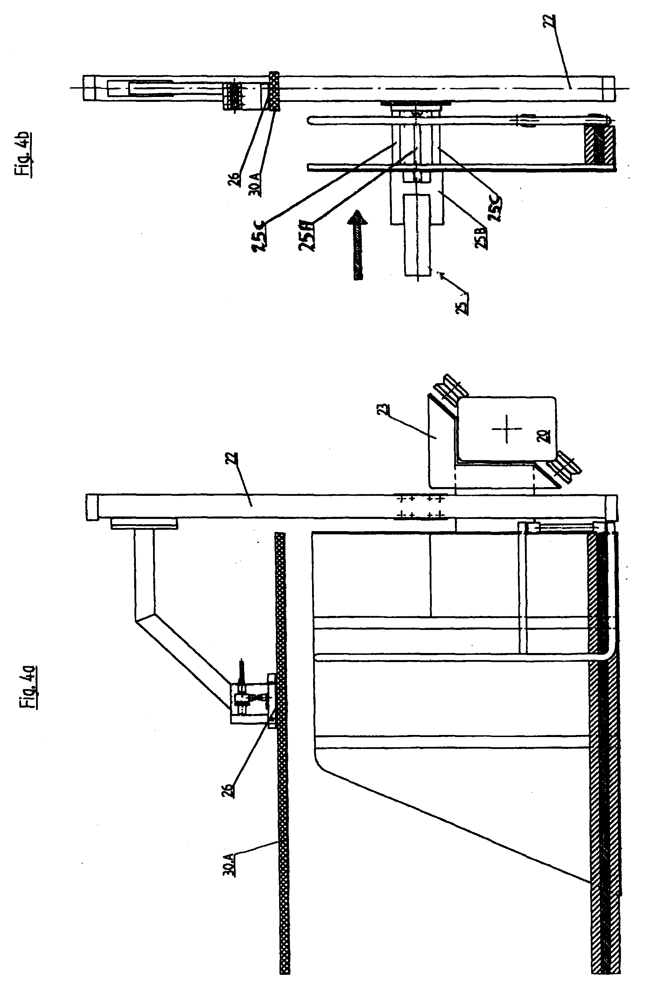

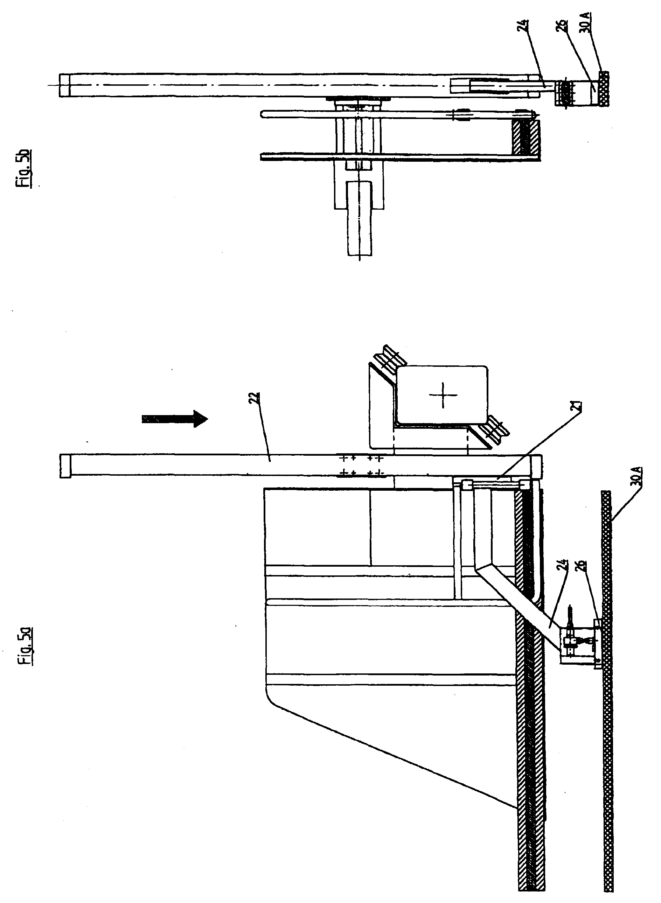

Wenn eine Latte aus dem Magazin genommen werden soll beginnt ein neuer Arbeitszyklus. Zunächst senkt sich der Arm 24 ab, bis der Vakuumgreifer 26 auf der obersten Latte 30A anliegt. Nun wird im Vakuumgreifer 26 ein Vakuum erzeugt, so daß die Latte 30A angesaugt wird (Fign. 2a, 2b). Nun wird der Arm 24 nach oben bewegt, wobei die Latte 30A vom Vakuumgreifer 26 festgehalten wird (Fig.3a, 3b). Nachdem der Vertikalläufer 21 eine obere Endposition an der Vertikalschiene 22 erreicht hat, wird der zweite Läufer 23 auf der Horizontalschiene 20 verfahren, so daß sich die Latte 30A seitlich vom Magazin weg bewegt (Fig.4b). Nachdem der zweite Läufer 23 eine vorbestimmte Position erreicht hat, wird der Arm 24 abgesenkt bis sich die Latte 30A auf oder knapp über dem sich bildenden Holzstapel befindet (siehe Fign. 5a, 5b; der sich bildende Holzstapel ist hier nicht dargestellt).

Nun wird das Vakuum am Vakuumkreislauf 26 abgestellt, die Latte 30A wird freigegeben und kommt auf dem sich bildenden Holzstapel zu liegen. Anschließend fährt der Vakuumgreifer 26 in die in den Fign. 1 dargestellte erste Arbeitsstellung zurück, wo er verbleibt bis ein neuer Arbeitszyklus beginnt.

Alternativ zum eben dargestellten Arbeitszyklus kann folgende Variante vorteilhaft sein:
Nach jedem Ablegen einer Latte fährt der Vakuumgreifer 26 unmittelbar zurück in die zweite Arbeitsstellung und greift die nächste Latte (Fig. 2). Anschließend wird er in eine zeichnerisch nicht dargestellte Warteposition bewegt. Diese Warteposition liegt einige Zentimeter über der in Fig. 5 dargestellten fünften Arbeitsstellung. Wenn dann die Latte benötigt wird, wird der Vakuumgreifer in die fünfte Arbeitsstellung abgesenkt und die Latte freigegeben, das heißt auf den Holzstapel abgelegt. Jetzt beginnt der Arbeitszyklus von vorne. Diese Variante hat den Vorteil, daß die Latten unmittelbar dann zur Verfügung stehen, wenn sie benötigt werden.

Im folgenden seien noch einige andere Ausführungsbeispiele erwähnt, die jedoch nicht zeichnerisch dargestellt sind:
- Anstatt die Vertikalschiene horizontal verfahrbar anzuordnen, könnte man diese auch stationär halten und statt dessen das Magazin horizontal verfahren.
- Wenn man den ersten Anschlag nicht vertikal, sondern leicht geneigt anordnet, kann man auf den zweiten Anschlag verzichten, da in diesem Fall die Latten durch die Schwerkraft an den ersten Anschlag gedrückt werden und auch so eine exakte Position erhalten.
- Es ist nicht zwingend notwendig, mit einer Kombination von zwei Linearbewegungen zu arbeiten, es ist lediglich erforderlich, daß Greifer und Magazin zwei Freiheitsgrade zueinander haben.
- Es muß nicht zwangsläufig ein Vakuumgreifer verwendet werden, es sind auch andere Arten von Greifern denkbar.

## Patentansprüche

1. Lattenlegevorrichtung zum Auflegen von Latten auf Holzstapel mit:
- einem Magazin zur Aufnahme der zu legenden Latten (30), wobei das Magazin wenigstens einen senkrecht oder schräg stehenden Anschlag (10) aufweist, an dem die Latten anliegen,
- einem in eine erste Richtung bewegbaren Greifer zum Auflegen der Latten (10) auf einen Holzstapel,
dadurch gekennzeichnet, daß der Greifer im Verhältnis zum Magazin auch in eine zweite Richtung verschiebbar oder verschwenkbar ist und so angeordnet ist, daß er die jeweils oberste Latte aus dem Magazin aufnehmen, und auf den Holzstapel auflegen kann.

2. Lattenlegevorrichtung nach Anspruch 1, dadurch gekennzeichnet, daß der erste Anschlag (10) senkrecht steht, daß ein zweiter, zum ersten paralleler Anschlag (12) angeordnet ist.

3. Lattenlegevorrichtung nach Anspruch 2, dadurch gekennzeichnet, daß der zweite Anschlag (12) gegenüber dem ersten bewegbar ist und Beaufschlagungsmittel vorgesehen sind, mit denen der zweite Anschlag gegen die am ersten Anschlag (10) anliegenden Latten (30) andrückbar ist.

4. Lattenlegevorrichtung nach Anspruch 3, dadurch gekennzeichnet, daß der zweite Anschlag (12) um eine Achse (A-A) schwenkbar ist.

5. Lattenlegevorrichtung nach einem der Ansprüche 3 oder 4, dadurch gekennzeichnet, daß die Beaufschlagungsmittel eine oder mehrere Federn sind.

6. Lattenlegevorrichtung nach einem der Ansprüche 3 oder 4, dadurch gekennzeichnet, daß die Beaufschlagungsmittel ein oder mehrere Luftzylinder sind.

7. Lattenlegevorrichtung nach einem der Ansprüche 2 bis 6, dadurch gekennzeichnet, daß der Greifer linear horizontal und vertikal bewegbar ist.

8. Lattenlegevorrichtung nach einem der vorangehenden Ansprüche, dadurch gekennzeichnet, daß der Greifer ein Vakuumgreifer (26) ist.

9. Lattenlegevorrichtung nach einem der vorhergehenden Ansprüche, dadurch gekennzeichnet, daß sie ein weiteres Mittel aufweist, die die Lattenlegevorrichtung als Ganzes horizontal verschiebbar macht.
